# EUROPEAN PATENT APPLICATION

(11) **EP 4 737 244 A1**
(43) Date of publication of application: **06.05.2026**
(21) Application number: 24739266.5
(22) Date of filing: 04.06.2024
(51) Int. Cl.: B60W 30/16

(54) **CONTROL DEVICE AND CONTROL METHOD FOR RIDER ASSIST SYSTEM**

(30) Priority: 27.06.2023 JP 2023105365
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2024/055422
(87) International publication number: WO 2025/003799

(57) **Abstract**

The invention obtains a controller and a control method capable of improving assistance performance for a rider.

At a first stage of an automatic deceleration process that is a process to automatically decelerate a traveling own vehicle and cause the own vehicle to stop or slow down in a state where there is a diagonally forward vehicle as another straddle-type vehicle located diagonally ahead of the own vehicle and traveling with the own vehicle in a group but there is no other straddle-type vehicle located in front of the own vehicle and traveling with the own vehicle in the group, an execution section executes action to adjust a positional relationship between the own vehicle and the diagonally forward vehicle, and such action is based on actual measured information on the positional relationship actually measured at the first stage. Then, at a second stage after the first stage of the automatic deceleration process, the execution section does not execute the action to adjust the positional relationship between the own vehicle and the diagonally forward vehicle, and such action is based on actual measured information on a positional relationship actually measured at the second stage.

## Description

### Technical Field

The present invention relates to a controller for a rider-assistance system of a straddle-type vehicle and a control method for a rider-assistance system of a straddle-type vehicle.

### Background Art

In one type of conventional rider-assistance systems, a controller executes positional relationship adjustment action that is action to adjust a positional relationship between an own vehicle and a target on the basis of positional relationship information (for example, see PTL 1). The positional relationship information is actual measured information on the positional relationship between the own vehicle and the target and is acquired during travel of the own vehicle.

### Citation List

### Patent Literature

PTL 1: WO2018/197965A1

### Summary of Invention

### Technical Problem

Such a case is assumed that the positional relationship adjustment action is executed by the rider-assistance system in an enabled state of a group travel mode. The group travel mode is a mode in which plural straddle-type vehicles including the own vehicle travel in a group. Even in the case where the positional relationship adjustment action is executed in such a state, it is desired that the controller can automatically decelerate the own vehicle and cause the own vehicle to stop or slow down. Unlike other types of vehicles (such as a passenger car, a truck, and the like), the straddle-type vehicle has a small body size and a great degree of freedom in a travel position. For such reasons, the group travel is possibly made in a special mode (for example, a mode in which the plural straddle-type vehicles travel while forming plural vehicle lines in a single travel lane, or the like). Thus, the controller is required to execute the positional relationship adjustment action that can correspond to a situation where the group travel is made in such a special mode.

The invention has been made with the above-described problem as the background and therefore obtains a controller capable of improving assistance performance for a rider. The invention also obtains a control method capable of improving the assistance performance for the rider.

### Solution to Problem

A controller according to the invention is a controller for a rider-assistance system and includes: an acquisition section that acquires positional relationship information during travel of an own vehicle in an enabled state of a group travel mode as a mode in which plural straddle-type vehicles including the own vehicle travel in a group, the positional relationship information being actual measured information on a positional relationship between the own vehicle and a target; and an execution section that executes positional relationship adjustment action on the basis of the positional relationship information acquired by the acquisition section, the positional relationship adjustment action being action to adjust the positional relationship between the own vehicle and the target. At a first stage of an automatic deceleration process that is a process to automatically decelerate the traveling own vehicle and cause the own vehicle to stop or slow down in a state where there is a diagonally forward vehicle as another straddle-type vehicle that is located diagonally ahead of the own vehicle and travels with the own vehicle in the group but there is no other straddle-type vehicle that is located in front of the own vehicle and travels with the own vehicle in the group, the execution section executes, as the positional relationship adjustment action, action to adjust the positional relationship between the own vehicle and the diagonally forward vehicle as the target, and such action is based on the positional relationship information actually measured at the first stage. At a second stage after the first stage of the automatic deceleration process, the execution section does not execute, as the positional relationship adjustment action, action to adjust the positional relationship between the own vehicle and the diagonally forward vehicle as the target, and such action is based on the positional relationship information actually measured at the second stage.

A control method according to the invention is a control method for a rider-assistance system and includes: acquiring positional relationship information by an acquisition section of a controller during travel of an own vehicle in an enabled state of a group travel mode as a mode in which plural straddle-type vehicles including the own vehicle travel in a group, the positional relationship information being actual measured information on a positional relationship between the own vehicle and a target; and executing positional relationship adjustment action by an execution section of the controller on the basis of the positional relationship information acquired by the acquisition section, the positional relationship adjustment action being action to adjust the positional relationship between the own vehicle and the target. At a first stage of an automatic deceleration process that is a process to automatically decelerate the traveling own vehicle and cause the own vehicle to stop or slow down in a state where there is a diagonally forward vehicle as another straddle-type vehicle that is located diagonally ahead of the own vehicle and travels with the own vehicle in the group but there is no other straddle-type vehicle that is located in front of the own vehicle and travels with the own vehicle in the group, the execution section executes, as the positional relationship adjustment action, action to adjust the positional relationship between the own vehicle and the diagonally forward vehicle as the target, and such action is based on the positional relationship information actually measured at the first stage. At a second stage after the first stage of the automatic deceleration process, the execution section does not execute, as the positional relationship adjustment action, action to adjust the positional relationship between the own vehicle and the diagonally forward vehicle as the target, and such action is based on the positional relationship information actually measured at the second stage.

### Advantageous Effects of Invention

In regard to the controller and the control method according to the invention, at the first stage of the automatic deceleration process, which is the process to automatically decelerate the traveling own vehicle and cause the own vehicle to stop or slow down in the state where there is the diagonally forward vehicle as the other straddle-type vehicle that is located diagonally ahead of the own vehicle and travels with the own vehicle in a group but there is no other straddle-type vehicle that is located in front of the own vehicle and travels with the own vehicle in the group, the execution section executes the action to adjust the positional relationship between the own vehicle and the diagonally forward vehicle, which is actually measured at the first stage, on the basis of the actual measured information on such a positional relationship. Meanwhile, at the second stage after the first stage of the automatic deceleration process, the execution section does not execute the action to adjust the positional relationship between the own vehicle and the diagonally forward vehicle, which is actually measured at the second stage, on the basis of the actual measured information on such a positional relationship. Accordingly, even in a situation where the group travel is made in a special mode (for example, a mode in which the plural straddle-type vehicles travel while forming plural vehicle lines in a single travel lane, or the like), the positional relationship adjustment action that is less likely to disrupt formation of the group travel can be executed by appropriately controlling the positional relationship between the own vehicle and the diagonally forward vehicle at the first stage of the automatic deceleration process. Meanwhile, at the second stage of the automatic deceleration process, it is possible to suppress inappropriate behavior of the own vehicle, which is caused by a difficulty in acquisition of surrounding environment information on a side of the own vehicle with a device (for example, a surrounding environment detector, a communication device, or the like) for acquiring surrounding environment information diagonally ahead of the own vehicle, regardless of a fact that the controller has to bring the positional relationship between the own vehicle and the diagonally forward vehicle in an advancing direction or a vehicle body front-rear direction closer so that the own vehicle can stop or slow down on a side of the diagonally forward vehicle.

### Brief Description of Drawings

Fig. 1 is a view illustrating a mounted state of a rider-assistance system according to an embodiment of the invention to a straddle-type vehicle.
Fig. 2 is a diagram illustrating a system configuration of the rider-assistance system according to the embodiment of the invention.
Fig. 3 is a view for explaining the configuration of the rider-assistance system according to the embodiment of the invention.
Fig. 4 is another view for explaining the configuration of the rider-assistance system according to the embodiment of the invention.
Fig. 5 is further another view for explaining the configuration of the rider-assistance system according to the embodiment of the invention.
Fig. 6 is further another view for explaining the configuration of the rider-assistance system according to the embodiment of the invention.
Fig. 7 is a chart illustrating an action flow of a controller in the rider-assistance system according to the embodiment of the invention.

### Description of Embodiments

A description will hereinafter be made on a controller and a control method according to the invention with reference to the drawings.

A configuration, action, and the like, which will be described below, merely constitute one example, and the controller and the control method according to the invention are not limited to a case with such a configuration, such action, and the like.

For example, a description will hereinafter be made on a case where the controller and the control method according to the invention are used for a rider-assistance system of a two-wheeled motor vehicle. However, the controller and the control method according to the invention may be used for a rider-assistance system of a straddle-type vehicle other than the two-wheeled motor vehicle. The straddle-type vehicle means a vehicle that a rider drives while straddling a vehicle body thereof. Examples of the straddle-type vehicle are motorcycles (the two-wheeled motor vehicle and a three-wheeled motor vehicle) and a bicycle. The motorcycles include a vehicle having an engine as a power source, a vehicle having an electric motor as the power source, and the like. Examples of the motorcycles are a motorbike, a scooter, and an electric scooter. The bicycle means a vehicle capable of traveling forward on a road by a depression force applied to pedals by a rider. Examples of the bicycle are a normal bicycle, an electrically-assisted bicycle, and an electric bicycle.

The same or similar description will appropriately be simplified or will not be made below. In the drawings, the same or similar portions will be denoted by the same reference sign or will not be denoted by a reference sign. A detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

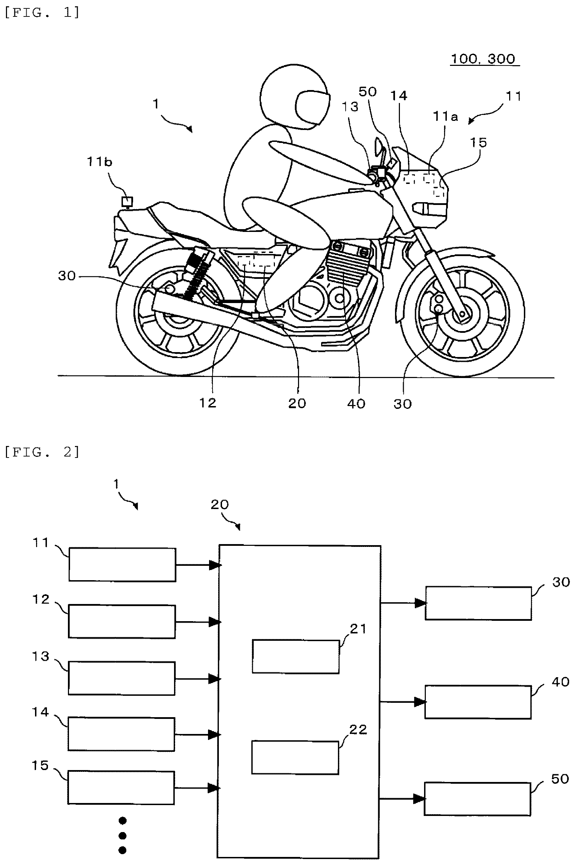

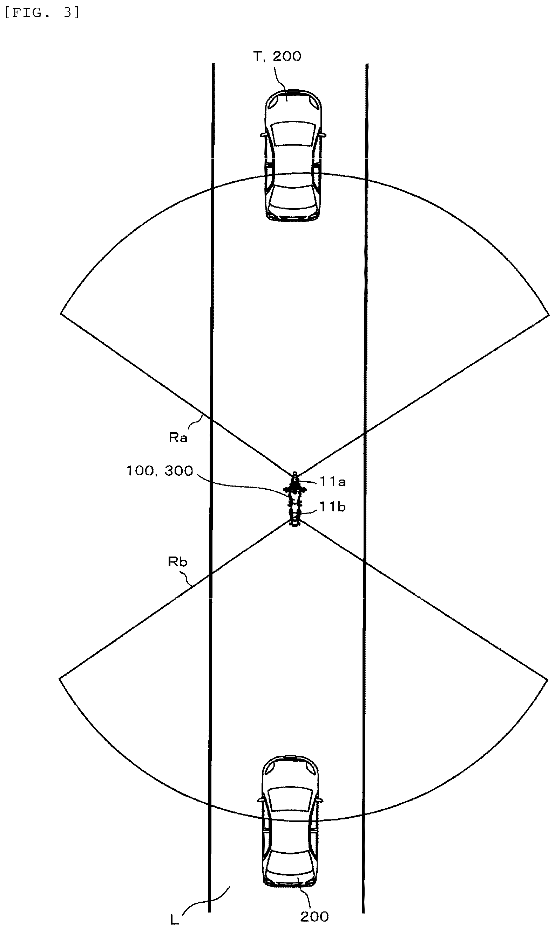

Fig. 1 is a view illustrating a mounted state of the rider-assistance system according to the embodiment of the invention to a straddle-type vehicle. Fig. 2 is a diagram illustrating a system configuration of the rider-assistance system according to the embodiment of the invention. Fig. 3 to Fig. 6 are views for explaining a configuration of the rider-assistance system according to the embodiment of the invention.

As illustrated in Fig. 1 and Fig. 2, a rider-assistance system 1 is mounted to an own vehicle 100. The own vehicle 100 is a straddle-type vehicle 300 that a rider assisted by the rider-assistance system 1 rides. For example, the rider-assistance system 1 includes a surrounding environment detector 11, a vehicle behavior detector 12, a setting input device 13, a communication device 14, a positioning device 15, a controller (ECU) 20, a brake system 30, a drive system 40, and a notification device 50 when necessary.

In the rider-assistance system 1, the controller 20 executes rider-assistance action to assist the rider of the own vehicle 100 in driving by using output of the surrounding environment detector 11, the vehicle behavior detector 12, the setting input device 13, the communication device 14, and/or the positioning sensor 15. The controller 20 executes the rider-assistance action by outputting control commands to various devices (for example, the brake system 30, the drive system 40, the notification device 50, and the like). When necessary, the controller 20 receives output of various devices (not illustrated) for detecting other types of information (for example, information on an operation state of the brake system 30 by the rider, information on an operation state of the drive system 40 by the rider, and the like). Each component of the rider-assistance system 1 may exclusively be used for the rider-assistance system 1 or may be shared with another system.

The surrounding environment detector 11 at least includes a detection section 11a that is disposed to the own vehicle 100 in a state of facing the front. In addition to surrounding environment information in front of the own vehicle 100, the detection section 11a detects surrounding environment information diagonally ahead of the own vehicle 100. The term "ahead" is defined as a concept that includes both "in front" and "diagonally ahead". When necessary, the surrounding environment detector 11 also includes a detection section 11b that is disposed to the own vehicle 100 in a state of facing behind. In addition to surrounding environment information at the rear of the own vehicle 100, the detection section 11b detects surrounding environment information diagonally behind the own vehicle 100. The term "behind" is defined as a concept that includes both "at the rear" and "diagonally behind." The terms "in front" and "at the rear" may each be defined as a direction that extends along an advancing direction (that is, a direction in which a degree of turn of the own vehicle 100 is taken into consideration) from a reference point (for example, a center of gravity, or the like) of the own vehicle 100, or may each be defined as a direction that extends along a vehicle body front-rear direction (that is, a direction in which the degree of turn of the own vehicle 100 is not taken into consideration) from the reference point (for example, the center of gravity, or the like) of the own vehicle 100. Each of the detection sections 11a, 11b is a radar, a Lidar sensor, an ultrasonic sensor, a camera, or the like, for example. The detection section 11a may include plural sensors, each of which has, as a detection range, a mutually different area of areas ahead of the own vehicle 100. The detection section 11b may include plural sensors, each of which has, as a detection range, a mutually different area in an area behind the own vehicle 100.

Examples of the vehicle behavior detector 12 are a vehicle speed sensor and an inertial measurement unit (IMU). The vehicle speed sensor detects a vehicle speed generated to the own vehicle 100. The vehicle speed sensor may detect another physical quantity that can substantially be converted to the vehicle speed generated to the own vehicle 100. The IMU detects acceleration in three axes (a vehicle body front-rear direction, a vehicle body width direction, and a vehicle body height direction) and angular velocities in three axes (roll, pitch, and yaw) generated to the own vehicle 100. The IMU may detect other physical quantities that can substantially be converted to the three-axis acceleration and the three-axis angular velocities generated to the own vehicle 100. Alternatively, the IMU may partially detect the three-axis acceleration and the three-axis angular velocities.

The setting input device 13 accepts input of various settings by the rider. For example, the rider can switch to enable or disable any of various types of the rider-assistance action by using the setting input device 13. In addition, for example, the rider can set various modes or various control parameters (for example, allowable values or the like) that are used in the various types of the rider-assistance action by using the setting input device 13. The setting input device 13 may accept an operation by the rider's body (for example, a hand, a foot, or the like) or may accept voice produced by the rider. Furthermore, the setting input device 13 may be provided to the own vehicle 100 or may be provided to an accessory (for example, a helmet, a glove, or the like) that is associated with the own vehicle 100.

The communication device 14 wirelessly communicates with another communication device that is provided to another vehicle located around the own vehicle 100 and/or with another communication device that is provided to a road facility (for example, a traffic light, a traffic sign, a guardrail, a utility pole, a stop line, or the like). For example, the communication device provided to the other vehicle transmits, to the communication device 14, travel state information of the other vehicle detected by the other vehicle, surrounding environment information of the other vehicle detected by the other vehicle, and the like. For example, the other communication device provided to the road facility transmits, to the communication device 14, state information of the road facility, surrounding environment information of the road facility detected by the road facility, and the like. The communication device 14 may include plural receivers, each of which has a mutually different area as a communication range.

The positioning device 15 receives positioning signals transmitted from plural communications satellites to identify a location of the own vehicle 100 on a global positioning system. The location of the own vehicle 100 is matched against map information, and location information thereof on a map is acquired.

The controller 20 at least includes an acquisition section 21 and an execution section 22. A whole or each of the sections of the controller 20 may collectively be provided in a single casing or may separately be provided in plural casings. In addition, the controller 20 as a whole or each of the sections of the controller 20 may be a microcomputer, a microprocessor unit, or the like, may be one whose firmware or the like can be updated, or may be a program module or the like that is executed by a command from a CPU or the like, for example.

During travel of the own vehicle 100, the acquisition section 21 acquires the surrounding environment information of the own vehicle 100 on the basis of the output of the surrounding environment detector 11. The surrounding environment information includes positional relationship information that is actual measured information on a positional relationship between the own vehicle 100 and a target located around the own vehicle 100 (for example, another vehicle, an obstacle, a road facility, a person, an animal, or the like). Examples of the positional relationship information are information on a relative position, a relative distance, a relative speed, relative acceleration, relative jerk, a passing time difference, and a predicted time until a collision. The positional relationship information may be information on another physical quantity that can substantially be converted to any of those. The surrounding environment information also includes characteristic information of the target located around the own vehicle 100 (for example, the other vehicle, the obstacle, the road facility, the person, the animal, or the like). Examples of the characteristic information are brake indicator lamp information that is information on a state of a brake indicator lamp of the other vehicle, traffic light information that is information on a state of a traffic light, drawing information that is information on a content of a drawing (for example, a stop line or the like) on a road, traffic sign information that is information on a content of a traffic sign, and traffic event information that is information on a traffic event (for example, traffic jam, construction work, an accident, or the like). The characteristic information may be information on another physical quantity that can substantially be converted to any of those. During the travel of the own vehicle 100, the acquisition section 21 may acquire the surrounding environment information of the own vehicle 100 on the basis of the output of the communication device 14.

The execution section 22 executes, as the rider-assistance action, vehicle speed control action that is action to automatically control the vehicle speed generated to the own vehicle 100. When executing the vehicle speed control action, the execution section 22 outputs the control command to the brake system 30 or the drive system 40. The brake system 30 brakes the own vehicle 100. The drive system 40 as a power source of the own vehicle 100 drives the own vehicle 100. The brake system 30 may be controlled to generate or increase deceleration, or may be controlled to generate or increase acceleration. The drive system 40 may be controlled to generate or increase the acceleration, or may be controlled to generate or increase the deceleration. The vehicle speed control action is canceled when there is a predetermined operational intervention by the rider.

When executing the vehicle speed control action, the execution section 22 outputs the control command to the notification device 50 as necessary. The notification device 50 may warn or notify the rider of the information by display (that is, a sensation through a visual organ as a sensory organ), may warn or notify the rider of the information by sound (that is, a sensation through an auditory organ as the sensory organ), or may warn or notify the rider of the information by vibration (that is, a sensation through a tactile organ as the sensory organ). Examples of the notification device 50 are a display, a lamp, a speaker, and a vibrator. The notification device 50 may be provided to the own vehicle 100 or may be provided to the accessory (for example, the helmet, the glove, or the like) that is associated with the own vehicle 100. In addition, notification action may be action to warn or notify the rider of the information by generating the instantaneous deceleration or acceleration to the own vehicle 100. That is, the brake system 30 or the drive system 40 may constitute the notification device 50.

As illustrated in Fig. 3, in the case where a group travel mode, which will be described below, is disabled, the execution section 22 causes the own vehicle 100 to execute first positional relationship adjustment action as the vehicle speed control action. The first positional relationship adjustment action is action to adjust a positional relationship (in particular, a positional relationship in the advancing direction or the vehicle body front-rear direction of the own vehicle 100) between the own vehicle 100 and a target T as a target located within a detection range Ra of the detection section 11a, that is, another vehicle 200 that travels in front of the own vehicle 100 on the basis of positional relationship information that is actual measured information on such a positional relationship. In the first positional relationship adjustment action, in addition to the other vehicle 200 that travels in front of the own vehicle 100, another vehicle 200 that travels at the rear of the own vehicle 100 may be set as the target T for adjustment of the positional relationship.

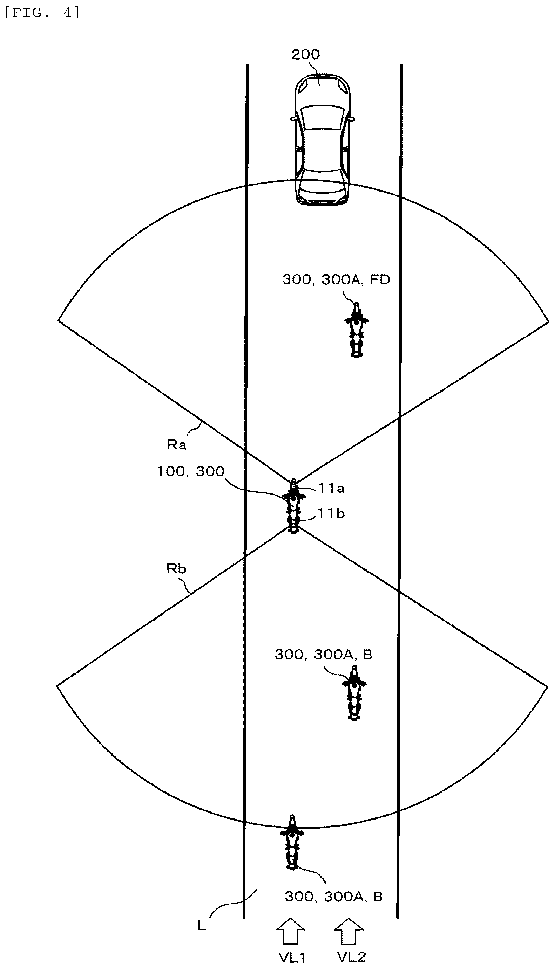

During the travel of the own vehicle 100, the execution section 22 determines whether the group travel mode is enabled. As illustrated in Fig. 4, the group travel mode is a mode in which the plural straddle-type vehicles 300 including the own vehicle 100 travel in a group, that is, travel in formation as a group. Here, in the group travel, the plural straddle-type vehicles 300 travel in formation of two vehicle lines VL1, VL2 in a single travel lane L. The number of the straddle-type vehicles 300 that travel in the group may be two.

For example, the group travel mode is automatically switched between being enabled or being disabled by the execution section 22 on the basis of the surrounding environment information that is acquired by the acquisition section 21. The execution section 22 determines whether the group travel mode is enabled on the basis of the switching information. Based on the surrounding environment information acquired by the acquisition section 21, the execution section 22 determines whether travel of the plural straddle-type vehicles 300 including the own vehicle 100 in a particular mode (for example, as illustrated in Fig. 4, a mode in which the plural straddle-type vehicles 300 including the own vehicle 100 travel in a zig-zag manner in the formation of the two vehicle lines VL1, VL2 ) continues over a reference time or a reference travel distance. Then, when such a determination is positive, the execution section 22 automatically enables the group travel mode. The execution section 22 may identify another straddle-type vehicle 300A that is located in the travel lane L where the own vehicle 100 travels, and may set only the identified other straddle-type vehicle 300A as the determination target. Alternatively, the execution section 22 may identify the other straddle-type vehicle 300A that keeps located around the own vehicle 100 over the reference time or the reference travel distance, and may set the identified other straddle-type vehicle 300A as the determination target without using information on a boundary of the travel lane L.

For example, the group travel mode is switched between being enabled or being disabled by the rider's setting input, and the execution section 22 determines whether the group travel mode is enabled on the basis of the output of the setting input device 13 acquired by the acquisition section 21. Here, the execution section 22 may automatically suggest to enable and/or disable the group travel mode on the basis of the surrounding environment information that is acquired by the acquisition section 21, and the suggestion may be confirmed by the rider's setting input of approval.

When the group travel mode is enabled, the execution section 22 causes the own vehicle 100 to execute second positional relationship adjustment action as the vehicle speed control action. The second positional relationship adjustment action is action that is executed under assumption of a state where the own vehicle 100 travels at a second position from the front in the formation. That is, in the second positional relationship adjustment action, a diagonally forward vehicle FD exists as the other straddle-type vehicle 300A that is located diagonally ahead of the own vehicle 100 and travels with the own vehicle 100 in the group, but there is no other straddle-type vehicle 300A that is located in front of the own vehicle 100 and travels with the own vehicle 100 in the group. Such a state may automatically be determined on the basis of the surrounding environment information, or may be determined on the basis of information on the setting operation by the rider on the setting input device 13. In such a state, a target detection area by the surrounding environment detector 11 or a target communication area by the communication device 14 may be expanded or reduced to include an area diagonally ahead of the own vehicle 100. Such expansion and/or reduction may be achieved by changing the sensor and/or the receiver to be used, may be achieved by changing an orientation of the sensor and/or the receiver, or may be achieved by changing a processing area for data output from the sensor and/or the receiver.

The second positional relationship adjustment action is action to adjust the positional relationship (in particular, the positional relationship in the advancing direction or the vehicle body front-rear direction of the own vehicle 100) between the own vehicle 100 and the target T as the target located within the detection range Ra of the detection section 11a, that is, the diagonally forward vehicle FD on the basis of the positional relationship information that is the actual measured information on such a positional relationship. In the second positional relationship adjustment action, in addition to the diagonally forward vehicle FD, the other vehicle 200, which travels in front of the own vehicle 100, and/or a rear vehicle B may each be set as the target T for adjustment of the positional relationship. The rear vehicle B is the other straddle-type vehicle 300A that is located behind (at the rear of or diagonally behind) the own vehicle 100 and travels with the own vehicle 100 in the group. Whether the other straddle-type vehicle 300A is the vehicle that travels with the own vehicle 100 in the group may be determined on the basis of information on an elapsed time of the positional relationship with the own vehicle 100 or may be determined on the basis of information that is registered in advance by the rider. Examples of the information that is registered in advance by the rider are: information on arrangement (for example, the top, the middle, the last, an order from the top or the last, a right vehicle line, a left vehicle line, or the like) of the own vehicle 100 in the formation that is formed by the group travel; and information used to identify the other straddle-type vehicle 300A that belongs to the group (for example, a model, a color, license plate information, or the like).

Each of the first positional relationship adjustment action and the second positional relationship adjustment action may be action to adjust the positional relationship (in particular, the positional relationship in the advancing direction or the vehicle body front-rear direction of the own vehicle 100) between the own vehicle 100 and the target T (that is, the other vehicle 200 or the other straddle-type vehicle 300A) by automatically generating the deceleration or the acceleration to the own vehicle 100 without relying on the operation of the brake system 30 and the drive system 40 by the rider (for example, adaptive cruise control action for controlling an inter-vehicle distance with or a passing time difference from the target T, that is, using the target T as a speed following target, action that is executed in a state where the rider is operating the drive system 40 and that actuates the brake system 30 to control the inter-vehicle distance with or the passing time difference from the target T to a distance or a passing time difference corresponding to an operation amount of the drive system 40 by the rider, action that is executed in a state where the rider is operating the brake system 30 and that actuates the drive system 40 to control the inter-vehicle distance with or the passing time difference from the target T to the distance or the time difference corresponding to an operation amount of the brake system 30 by the rider, or the like). Alternatively, each of the first positional relationship adjustment action and the second positional relationship adjustment action may automatically increase or reduce the braking force generated to the own vehicle 100 and thereby adjust the positional relationship between the own vehicle 100 and the target T in order to correct excess or deficiency of the operation of the brake system 30 by the rider. Further alternatively, each of the first positional relationship adjustment action and the second positional relationship adjustment action may automatically increase or reduce the drive power generated to the own vehicle 100 and thereby adjust the positional relationship between the own vehicle 100 and the target T in order to correct the excess or the deficiency of the operation of the drive system 40 by the rider.

The execution section 22 determines presence or absence of necessity to cause the own vehicle 100 to stop or slow down during the travel of the own vehicle 100. During execution of the second positional relationship adjustment action, when determining that there is the necessity to cause the own vehicle 100 to stop or slow down, the execution section 22 initiates an automatic deceleration process that is a process to automatically decelerate the traveling own vehicle 100 and cause the own vehicle 100 to stop or slow down. However, the execution section 22 may execute the automatic deceleration process without determining the presence or the absence of the necessity to cause the own vehicle 100 to stop or slow down during the travel of the own vehicle 100. That is, the automatic deceleration process may be executed when the execution section 22 executes the second positional relationship adjustment action, which results in the stop or slowing down of the own vehicle 100.

For example, the execution section 22 determines the presence or the absence of the necessity to cause the own vehicle 100 to stop or slow down on the basis of the output of the vehicle behavior detector 12 of the own vehicle 100. In the case where the output of the vehicle behavior detector 12 is information indicating that the vehicle speed of the own vehicle 100 falls below a reference value at a current time point or in the future, the execution section 22 determines that there is the necessity to cause the own vehicle 100 to stop or slow down.

For example, the execution section 22 determines the presence or the absence of the necessity to cause the own vehicle 100 to stop or slow down on the basis of the output of the surrounding environment detector 11 and/or the communication device 14. In the case where the output of the surrounding environment detector 11 and/or the communication device 14 is information indicating that there is a vehicle (for example, the diagonally forward vehicle FD, the other vehicle 200 that travels in front of the own vehicle 100, or the like) that stops or slows down ahead of the own vehicle 100, the execution section 22 determines that there is the necessity to to cause the own vehicle 100 to stop or slow down. In the case where the output of the surrounding environment detector 11 and/or the communication device 14 is information indicating that the vehicle traveling ahead of the own vehicle 100 (for example, the diagonally forward vehicle FD, the other vehicle 200 that travels in front of the own vehicle 100, or the like) is decelerated at a high deceleration rate, the execution section 22 determines that there is the necessity to cause the own vehicle 100 to stop or slow down. In the case where the output of the surrounding environment detector 11 and/or the communication device 14 is information indicating that a display color of the traffic light ahead of the own vehicle 100 is red or yellow, the execution section 22 determines that there is the necessity to cause the own vehicle 100 to stop or slow down. In the case where the output of the surrounding environment detector 11 and/or the communication device 14 is information indicating that there is a stop line (in particular, a stop line instructing a temporary stop) ahead of the own vehicle 100, the execution section 22 determines that there is the necessity to cause the own vehicle 100 to stop or slow down. In the case where the output of the surrounding environment detector 11 and/or the communication device 14 is information indicating that there is a traffic sign instructing to stop or slow down ahead of the own vehicle 100, the execution section 22 determines that there is the necessity to cause the own vehicle 100 to stop or slow down. In the case where the output of the surrounding environment detector 11 and/or the communication device 14 is information indicating that traffic jam or an accident has occurred ahead of the own vehicle 100, the execution section 22 determines that there is the necessity to cause the own vehicle 100 to stop or slow down. In the case where the output of the surrounding environment detector 11 and/or the communication device 14 is information indicating that the construction work is performed ahead of the own vehicle 100, the execution section 22 determines that there is the necessity to cause the own vehicle 100 to stop or slow down.

For example, the execution section 22 determines the presence or the absence of the necessity to cause the own vehicle 100 to stop or slow down on the basis of the map information. In the case where the location information of the own vehicle 100 on the map, which is acquired on the basis of the output of the positioning device 15 and the map information, is the information indicating that there is the stop line (in particular, the stop line instructing the temporary stop) ahead of the own vehicle 100, the execution section 22 determines that there is the necessity to cause the own vehicle 100 to stop or slow down. In the case where the location information of the own vehicle 100 on the map, which is acquired on the basis of the output of the positioning device 15 and the map information, is information indicating that the own vehicle 100 is traveling in an area where the own vehicle 100 has to stop or slow down, the execution section 22 determines that there is the necessity to cause the own vehicle 100 to stop or slow down.

Here, at a first stage of the automatic deceleration process, the execution section 22 continues the second positional relationship adjustment action. That is, the execution section 22 executes action to adjust the positional relationship (in particular, the positional relationship in the advancing direction or the vehicle body front-rear direction of the own vehicle 100) between the own vehicle 100 and the target T as the target located within the detection range Ra of the detection section 11a, that is, the diagonally forward vehicle FD on the basis of the positional relationship information that is the actual measured information on such a positional relationship. In such action, in addition to the diagonally forward vehicle FD, the other vehicle 200, which travels in front of the own vehicle 100, and/or the rear vehicle B may each be set as the target T for adjustment of the positional relationship. The rear vehicle B is the other straddle-type vehicle 300A that travels behind (at the rear of or diagonally behind) the own vehicle 100 and travels with the own vehicle 100 in the group.

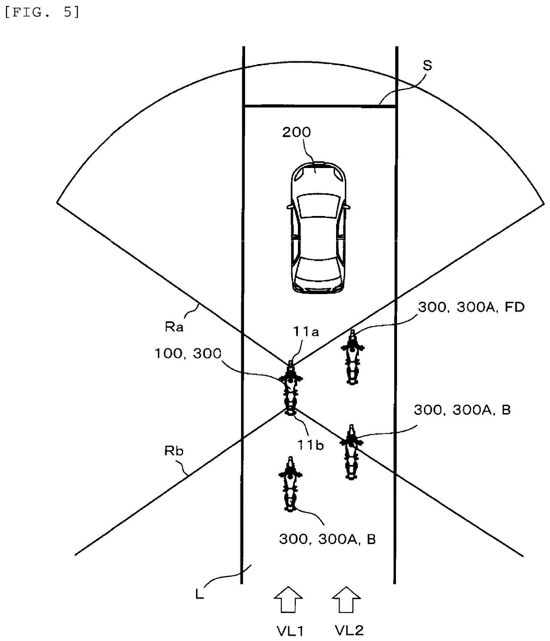

In the automatic deceleration process, with a reduction in a vehicle speed of the diagonally forward vehicle FD, the vehicle speed generated to the own vehicle 100 has to be controlled such that the positional relationship in the advancing direction or the vehicle body front-rear direction of the own vehicle 100 between the own vehicle 100 and the diagonally forward vehicle FD gradually becomes closer. Accordingly, the position of the diagonally forward vehicle FD gradually moves rearward with respect to the own vehicle 100 as the first stage of the automatic deceleration process progresses. Then, when the first stage continues, as illustrated in Fig. 5, the diagonally forward vehicle FD is brought into a state of being located outside the detection range Ra of the detection section 11a or located within an area with low detection accuracy in the detection range Ra of the detection section 11a. Here, even in the case where the second positional relationship adjustment action is executed not on the basis of the output of the surrounding environment detector 11 but on the basis of the output of the communication device 14, the diagonally forward vehicle FD is possibly brought into a state of being located outside a communicable range of the communication device 14 or located within an area with low communication accuracy in the communicable range of the communication device 14.

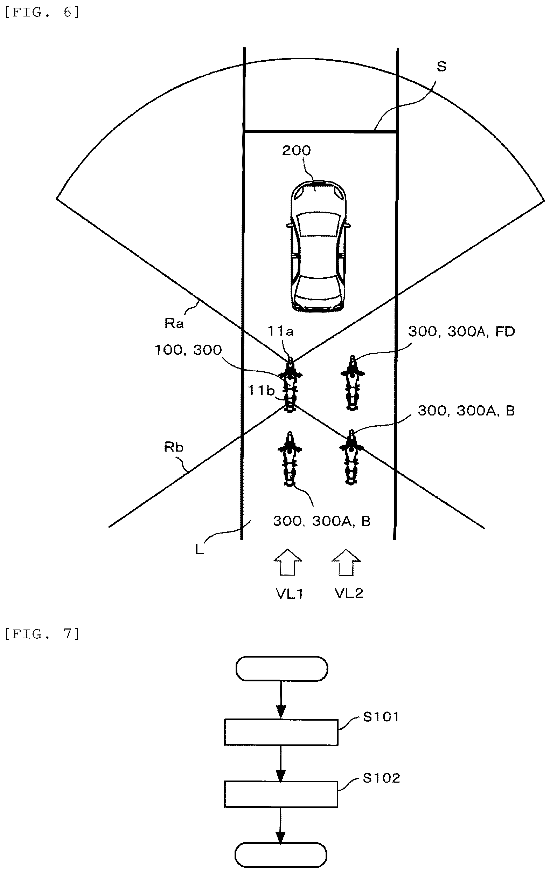

To handle the above problem, when determining that a predetermined condition is satisfied during the execution of the first stage, the execution section 22 initiates a second stage of the automatic deceleration process. At the second stage, the execution section 22 does not execute the second positional relationship adjustment action in which the diagonally forward vehicle FD is set as the target T. That is, at the second stage of the automatic deceleration process, the execution section 22 does not execute, as the second positional relationship adjustment action, the action to adjust the positional relationship (in particular, the positional relationship in the advancing direction or the vehicle body front-rear direction of the own vehicle 100) between the own vehicle 100 and the diagonally forward vehicle FD, and such action is based on the positional relationship information that is the actual measured information on such a positional relationship actually measured at the second stage. Due to the execution of the second stage by the execution section 22, as illustrated in Fig. 6, the own vehicle 100 can be controlled in a state where the own vehicle 100 can stop or slow down on a side of the other straddle-type vehicle 300A that is the diagonally forward vehicle FD at the second stage. Preferably, the rider's setting operation using the setting input device 13 can change whether to execute the second stage and/or a content of the control executed at the second stage. When determining that the predetermined condition is satisfied during the execution of the second stage, the execution section 22 terminates the second stage. In addition, when determining that the automatic deceleration process is no longer necessary, the execution section 22 terminates the second stage and resumes the second positional relationship adjustment action that uses the diagonally forward vehicle FD as the target T. Upon termination of the second stage, in the case where the predetermined condition is satisfied, the execution section 22 may disable the group travel mode and then initiate the first positional relationship adjustment action. Examples of the predetermined condition are a condition that a predetermined operational intervention (for example, an accelerating operation) has been made by the rider, a condition that the presence of the diagonally forward vehicle FD at a location where the own vehicle 100 cannot detect or communicate with the diagonally forward vehicle FD continues over a reference time, and a condition that the other vehicle 200 or the other straddle-type vehicle 300A located behind the own vehicle 100 exists at a location where the own vehicle 100 cannot detect or communicate with the other vehicle 200 or the other straddle-type vehicle 300A.

For example, at the second stage, the execution section 22 executes, as the second positional relationship adjustment action, the action to adjust the positional relationship (in particular, the positional relationship in the advancing direction or the vehicle body front-rear direction of the own vehicle 100) between the own vehicle 100 and the different target T from the diagonally forward vehicle FD, and such action is based on the positional relationship information that is the actual measured information on such a positional relationship measured at the second stage.

In particular, the target T is preferably the rear vehicle B that is the other straddle-type vehicle 300A located behind (at the rear of or diagonally behind) the own vehicle 100 and traveling with the own vehicle 100 in the group. At the second stage, the execution section 22 controls the vehicle speed generated to the own vehicle 100 on the basis of the positional relationship information that is the actual measured information on the positional relationship between the own vehicle 100 and the rear vehicle B, and then causes the own vehicle 100 to travel with a predetermined inter-vehicle distance with or a predetermined passing time difference from the rear vehicle B. At the second stage, since it is assumed that the rear vehicle B travels while taking the travel state of the diagonally forward vehicle FD into consideration, the travel of the own vehicle 100 is controlled in a manner to take the travel of the rear vehicle B into consideration. As a result, the own vehicle 100 can stop or slow down substantially on the side of the other straddle-type vehicle 300A that is the diagonally forward vehicle FD at the second stage.

In particular, the target T is preferably the target (for example, the other vehicle 200, the stop line S, or the like) that exists in front of the own vehicle 100. At the second stage, the execution section 22 controls the vehicle speed generated to the own vehicle 100 on the basis of the positional relationship information that is actual measured information on a positional relationship between the own vehicle 100 and the target, and then causes the own vehicle 100 to travel with a predetermined relative distance to, the predetermined passing time difference from, or a predetermined arrival time with respect to the target. At the second stage, since it is assumed that the diagonally forward vehicle FD travels while taking the positional relationship with the target into consideration, the own vehicle 100 travels with the target being set as the target T. As a result, the own vehicle 100 can stop or slow down substantially on the side of the other straddle-type vehicle 300A that is the diagonally forward vehicle FD at the second stage.

For example, at the second stage, the execution section 22 does not execute, as the second positional relationship adjustment action, the action to adjust the positional relationship (in particular, the positional relationship in the advancing direction or the vehicle body front-rear direction of the own vehicle 100) between the own vehicle 100 and the target T, and such action is based on the positional relationship information that is actual measured information on such a positional relationship actually measured at the second stage.

In particular, at the second stage, the execution section 22 preferably executes the vehicle speed control action, which is the action to automatically control the vehicle speed generated to the own vehicle 100, on the basis of the travel state information of the own vehicle 100 actually measured at the first stage (in particular, at the end of the first stage). At the second stage, the execution section 22 controls the vehicle speed generated to the own vehicle 100 on the basis of a change in the vehicle speed of the own vehicle 100 actually measured at the first stage. At the second stage, since it is assumed that the vehicle speed has to be changed in a similar manner to the change in the vehicle speed occurred to the own vehicle 100 at the first stage, the own vehicle 100 is brought into the same decelerated state (for example, at the same deceleration or the like) as that at the first stage. In this way, at the second stage, the own vehicle 100 can stop or slow down substantially on the side of the other straddle-type vehicle 300A that is the diagonally forward vehicle FD.

In particular, at the second stage, the execution section 22 preferably executes the vehicle speed control action, which is the action to automatically control the vehicle speed generated to the own vehicle 100, on the basis of the travel state information of the diagonally forward vehicle FD actually measured at the first stage (in particular, at the end of the first stage). At the second stage, the execution section 22 controls the vehicle speed generated to the own vehicle 100 on the basis of the change in the vehicle speed of the diagonally forward vehicle FD actually measured at the first stage. At the second stage, since it is assumed that the vehicle speed has to be changed in a similar manner to the change in the vehicle speed occurred to the diagonally forward vehicle FD at the first stage, the own vehicle 100 is brought into the same travel state (for example, at the same deceleration, the same stop distance, or the like) as the travel state of the diagonally forward vehicle FD at the first stage. In this way, at the second stage, the own vehicle 100 can stop or slow down substantially on the side of the other straddle-type vehicle 300A that is the diagonally forward vehicle FD.

In particular, at the second stage, the execution section 22 preferably executes the vehicle speed control action, which is the action to automatically control the vehicle speed generated to the own vehicle 100, on the basis of the travel state information of the rear vehicle B actually measured at the first stage (in particular, at the end of the first stage). At the second stage, the execution section 22 controls the vehicle speed generated to the own vehicle 100 on the basis of a change in the vehicle speed of the rear vehicle B actually measured at the first stage. At the second stage, since it is assumed that the vehicle speed has to be changed in a similar manner to the change in the vehicle speed occurred to the rear vehicle B at the first stage, the own vehicle 100 is brought into the same travel state (for example, at the same deceleration, the same stop distance, or the like) as the travel state of the rear vehicle B at the first stage. In this way, at the second stage, the own vehicle 100 can stop or slow down substantially on the side of the other straddle-type vehicle 300A that is the diagonally forward vehicle FD at the second stage.

For example, the execution section 22 determines whether to initiate and/or terminate the second stage on the basis of the travel state information of the own vehicle 100. When the vehicle speed generated to the own vehicle 100 falls below a reference value at the first stage, the execution section 22 initiates the second stage. When the own vehicle 100 stops or slows down, the execution section 22 terminates the second stage. When the vehicle speed of the own vehicle 100 exceeds the reference value at the second stage, the execution section 22 terminates the second stage.

For example, the execution section 22 determines whether to initiate and/or terminate the second stage on the basis of the travel state information of the diagonally forward vehicle FD. When the vehicle speed generated to the diagonally forward vehicle FD falls below a reference value at the first stage, the execution section 22 initiates the second stage. When the diagonally forward vehicle FD stops or slows down, the execution section 22 stops or slows down the own vehicle 100 in the predetermined travel state (for example, at the predetermined deceleration, the predetermined stop distance, or the like), and terminates the second stage. When the vehicle speed generated to the diagonally forward vehicle FD exceeds the reference value at the second stage, the execution section 22 terminates the second stage.

For example, the execution section 22 determines whether to initiate and/or terminate the second stage on the basis of the positional relationship information between the own vehicle 100 and the diagonally forward vehicle FD. At the first stage, in the case where the positional relationship information in the advancing direction or the vehicle body front-rear direction of the own vehicle 100 is information indicating that the diagonally forward vehicle FD is located with the inter-vehicle distance or the passing time difference from the own vehicle 100 falling below the reference value, the execution section 22 initiates the second stage. In the case where the positional relationship information in the advancing direction or the vehicle body front-rear direction of the own vehicle 100 is information indicating that the diagonally forward vehicle FD is located with the inter-vehicle distance or the passing time difference from the own vehicle 100 exceeding the reference value, the execution section 22 terminates the second stage. At the first stage, in the case where the positional relationship information is information indicating that the relative position of the diagonally forward vehicle FD to the own vehicle 100 is unsuitable for detection or communication, the execution section 22 initiates the second stage. In the case where the positional relationship information is information indicating that the relative position of the diagonally forward vehicle FD to the own vehicle 100 is suitable for detection or communication, the execution section 22 terminates the second stage. At the first stage, in the case where the positional relationship information is information indicating that the diagonally forward vehicle FD is located at a position where the own vehicle 100 cannot detect or communicate with the diagonally forward vehicle FD, the execution section 22 initiates the second stage. In addition to the condition that the diagonally forward vehicle FD is located at the position where the own vehicle 100 cannot detect or communicate with the diagonally forward vehicle FD, any of the following conditions may be provided. The conditions are that the diagonally forward vehicle FD is decelerated immediately before the detection thereof or the communication therewith becomes impossible, that the vehicle speed generated to the diagonally forward vehicle FD falls below the reference value immediately before the detection thereof or the communication therewith becomes impossible, that the diagonally forward vehicle FD is located with the inter-vehicle distance or the passing time difference from the own vehicle 100 falling below the reference value immediately before the detection thereof or the communication therewith becomes impossible, and that the diagonally forward vehicle FD is located with a vehicle body width direction distance from the own vehicle 100 exceeding a reference value immediately before the detection thereof or the communication therewith becomes impossible. At the second stage, in the case where the positional relationship information is the information indicating that the diagonally forward vehicle FD is located at a position where the own vehicle 100 can detect or communicate with the diagonally forward vehicle FD, the execution section 22 terminates the second stage. In addition to the condition that the diagonally forward vehicle FD is located at the position where the own vehicle 100 can detect or communicate with the diagonally forward vehicle FD, any of the following conditions may be provided. The conditions are that the diagonally forward vehicle FD is located at a predetermined relative position to the own vehicle 100 and/or the diagonally forward vehicle FD before the detection thereof or the communication therewith becomes impossible and that the diagonally forward vehicle FD is accelerated. In the case where the diagonally forward vehicle FD is decelerated even when such a condition is satisfied that the diagonally forward vehicle FD is located at the position where the own vehicle 100 can detect or communicate with the diagonally forward vehicle FD, the execution section 22 compares the deceleration currently generated to the own vehicle 100 with the deceleration to be generated to the own vehicle 100 by the second positional relationship adjustment action, which is resumed by using the diagonally forward vehicle FD as the target T, and controls the vehicle speed of the own vehicle 100 such that the higher deceleration thereof is generated to the own vehicle 100. A stop distance may be used instead of the deceleration.

For example, the execution section 22 determines whether to initiate and/or terminate the second stage on the basis of the travel state information of the rear vehicle B. When the vehicle speed generated to the rear vehicle B falls below a reference value at the first stage, the execution section 22 initiates the second stage. When the rear vehicle B stops or slows down, the execution section 22 causes the own vehicle 100 to stop or slow down in the predetermined travel state (for example, at the predetermined deceleration, the predetermined stop distance, or the like), and terminates the second stage. When the vehicle speed generated to the rear vehicle B exceeds the reference value at the second stage, the execution section 22 terminates the second stage.

For example, the execution section 22 determines whether to initiate and/or terminate the second stage on the basis of the positional relationship information between the own vehicle 100 and the rear vehicle B. At the first stage, in the case where the positional relationship information in the advancing direction or the vehicle body front-rear direction of the own vehicle 100 is information indicating that the rear vehicle B is located with the inter-vehicle distance or the passing time difference from the own vehicle 100 falling below a reference value, the execution section 22 initiates the second stage. In addition to the condition that the rear vehicle B is located with the inter-vehicle distance or the passing time difference from the own vehicle 100 falling below the reference value, any of the following conditions may be provided. The conditions are that the rear vehicle B is decelerated and that a relative speed of the rear vehicle B to the own vehicle 100 and/or the diagonally forward vehicle FD falls below a reference value. In the case where the positional relationship information in the advancing direction or the vehicle body front-rear direction of the own vehicle 100 is the information indicating that the rear vehicle B is located with the inter-vehicle distance or the passing time difference from the own vehicle 100 falling below the reference value, the execution section 22 causes the own vehicle 100 to stop or slow down in the predetermined travel state (for example, at the predetermined deceleration, the predetermined stop distance, or the like), and then terminates the second stage.

For example, the execution section 22 determines whether to initiate and/or terminate the second stage on the basis of road facility information. At the first stage, in the case where the road facility information is information indicating that the traffic light instructs the own vehicle 100 to stop, the execution section 22 initiates the second stage. At the first stage, in the case where the road facility information is information indicating that the stop line S (in particular, the stop line instructing the temporary stop) is located at a position where the relative distance thereof to the own vehicle 100 falls below a reference value, the execution section 22 initiates the second stage. In the case where the road facility information is information indicating that the traffic light does not instruct the own vehicle 100 to stop, the execution section 22 terminates the second stage.

In the second positional relationship adjustment action, the execution section 22 outputs the control command to the notification device 50 and notifies the rider of which of the first stage and the second stage is being executed. In the second positional relationship adjustment action (in particular, at the second stage), the execution section 22 outputs the control command to the notification device 50 and causes the notification device 50 to notify of the stop distance that is predicted under the current control. The execution section 22 outputs the control command to the notification device 50 and causes the notification device 50 to notify the rider of the target T that is set in the second positional relationship adjustment action (in particular, at the second stage). In the case where the second positional relationship adjustment action is executed at the second stage on the basis of the travel state information of the diagonally forward vehicle FD actually measured at the first stage (in particular, at the end of the first stage), at the second stage, the execution section 22 causes the diagonally forward vehicle FD to be displayed as if the diagonally forward vehicle FD is set as the target T. In the display, the execution section 22 displays the diagonally forward vehicle FD in a different mode (for example, a different color, brightness, or the like) from a mode in a state where the diagonally forward vehicle FD is actually set as the target T.

### <Action of Rider-Assistance System>

A description will be made on action of the rider-assistance system according to the embodiment.

Fig. 7 is a chart illustrating an action flow of the controller in the rider-assistance system according to the embodiment of the invention.

The controller 20 executes the action flow illustrated in Fig. 7 during the travel of the own vehicle 100.

### (Acquisition Step)

In step S101, in the enabled state of the group travel mode as the mode in which the plural straddle-type vehicles 300 including the own vehicle 100 travel in the group, the acquisition section 21 acquires the positional relationship information, which is the actual measured information on the positional relationship between the own vehicle 100 and the target T, during the travel of the own vehicle 100. The acquisition section 21 also acquires various types of the information when necessary.

### (Execution Step)

In step S102, in the case where the group travel mode is disabled, the execution section 22 causes the own vehicle 100 to execute the first positional relationship adjustment action. In the case where the group travel mode is enabled, the execution section 22 causes the own vehicle 100 to execute the second positional relationship adjustment action. In the second positional relationship adjustment action, at the first stage of the automatic deceleration process, the execution section 22 executes the action to adjust the positional relationship between the own vehicle 100 and the diagonally forward vehicle FD, which is actually measured at the first stage, and such action is based on the actual measured information on such a positional relationship. In the second positional relationship adjustment action, at the second stage of the automatic deceleration process, the execution section 22 does not execute the action to adjust the positional relationship between the own vehicle 100 and the diagonally forward vehicle FD, which is actually measured at the second stage, and such action is based on the actual measured information on such a positional relationship.

### <Effects of Rider-Assistance System>

A description will be made on effects of the rider-assistance system according to the embodiment.

At the first stage of the automatic deceleration process that is the process to automatically decelerate the traveling own vehicle 100 to cause the own vehicle 100 to stop or slow down in the state where there is the diagonally forward vehicle FD, which is the other straddle-type vehicle 300A located diagonally ahead of the own vehicle 100 and traveling with the own vehicle 100 in the group, but there is no other straddle-type vehicle 300A, which is located in front of the own vehicle 100 and travels with the own vehicle 100 in the group, the execution section 22 of the rider-assistance system 1 executes the action to adjust the positional relationship between the own vehicle 100 and the diagonally forward vehicle FD, which is actually measured at the first stage, and such action is based on the actual measured information on such a positional relationship. Meanwhile, at the second stage of the automatic deceleration process, the execution section 22 does not execute the action to adjust the positional relationship between the own vehicle 100 and the diagonally forward vehicle FD, which is actually measured at the second stage, and such action is based on the actual measured information on such a positional relationship. Accordingly, even in the situation where the group travel is made in the special mode (for example, the mode in which the plural straddle-type vehicles 300 travel while forming the plural vehicle lines VL1, VL2 in the single travel lane L, or the like), the positional relationship adjustment action that is less likely to disrupt the formation of the group travel can be executed by appropriately controlling the positional relationship between the own vehicle 100 and the diagonally forward vehicle FD at the first stage of the automatic deceleration process. Meanwhile, at the second stage of the automatic deceleration process, it is possible to suppress inappropriate behavior of the own vehicle 100, which is caused by a difficulty in acquisition of the surrounding environment information on the side of the own vehicle 100 with the device (for example, the surrounding environment detector 11, the communication device 14, or the like) for acquiring the surrounding environment information diagonally ahead of the own vehicle 100, regardless of the fact that the controller 20 has to bring the positional relationship between the own vehicle 100 and the diagonally forward vehicle FD in the advancing direction or the vehicle body front-rear direction closer so that the own vehicle 100 can stop or slow down on the side of the diagonally forward vehicle FD.

The description has been made so far on the embodiment. However, only a part of the embodiment may be implemented, parts of the embodiment may be combined, or a part of the embodiment may be modified to another aspect. In other words, the invention is not limited to the embodiment that has been described.

For example, the description has been made in the embodiment that the second stage is executed immediately after the first stage in the automatic deceleration process of the second positional relationship adjustment action. However, another stage may be executed between the first stage and the second stage.

For example, the description has been made in the embodiment that the rear vehicle B, the surrounding environment information of which is acquired, is the other straddle-type vehicle 300A that is located behind (at the rear of or diagonally behind) the own vehicle 100 and travels with the own vehicle 100 in the group. However, the rear vehicle B may be the other vehicle 200 that travels at the rear of the own vehicle 100, that is, a different type of the vehicle from the straddle-type vehicle.

### Reference Signs List

1: Rider-assistance system
11: Surrounding environment detector
11a, 11b: Detection section
12: Vehicle behavior detector
13: Setting input device
14: Communication device
15: Positioning device
20: Controller
21: Acquisition section
22: Execution section
30: Brake system
40: Drive system
50: Notification device
100: Own vehicle
200: Another vehicle
300, 300A: Straddle-type vehicle
T: target
FD: Diagonally forward vehicle
B: Rear vehicle
Ra, Rb: Detection range
L: Travel lane
VL1, VL2: Vehicle line
S: Stop line

## Claims

1. A controller (20) for a rider-assistance system (1), the controller comprising:
an acquisition section (21) that acquires positional relationship information as actual measured information on a positional relationship between an own vehicle (100) and a target (T) during travel of the own vehicle (100) in an enabled state of a group travel mode as a mode in which plural straddle-type vehicles (300) including the own vehicle (100) travel in a group; and
an execution section (22) that executes positional relationship adjustment action as action to adjust the positional relationship between the own vehicle (100) and the target (T) on the basis of the positional relationship information acquired by the acquisition section (21), wherein
at a first stage of an automatic deceleration process that is a process to automatically decelerate the traveling own vehicle (100) and cause the own vehicle (100) to stop or slow down in a state where there is a diagonally forward vehicle (FD) as another straddle-type vehicle (300A) that is located diagonally ahead of the own vehicle (100) and travels with the own vehicle (100) in the group but there is no other straddle-type vehicle (300A) that is located in front of the own vehicle (100) and travels with the own vehicle (100) in the group, the execution section (22) executes, as the positional relationship adjustment action, action to adjust a positional relationship between the own vehicle (100) and the diagonally forward vehicle (FD) as the target (T), and such action is based on positional relationship information actually measured at the first stage,
at a second stage after the first stage of the automatic deceleration process, the execution section (22) does not execute, as the positional relationship adjustment action, action to adjust the positional relationship between the own vehicle (100) and the diagonally forward vehicle (FD) as the target (T) on the basis of the positional relationship information actually measured at the second stage.

2. The controller according to claim 1, wherein
at the second stage, the execution section (22) executes, as the positional relationship adjustment action, action to adjust the positional relationship between the own vehicle (100) and the target (T) differing from the diagonally forward vehicle (FD), and such action is based on the positional relationship information actually measured at the second stage.

3. The controller according to claim 2, wherein
at the second stage, the execution section (22) executes, as the positional relationship adjustment action, action to adjust the positional relationship between the own vehicle (100) and a rear vehicle (B) as the target (T) that is another straddle-type vehicle (300A) located behind the own vehicle (100) and traveling with the own vehicle (100) in the group, and such action is based on the positional relationship information actually measured at the second stage.

4. The controller according to claim 2, wherein
at the second stage, the execution section (22) executes, as the positional relationship adjustment action, action to adjust the positional relationship between the own vehicle (100) and the target (T) that exists in front of the own vehicle (100), and such action is based on the positional relationship information actually measured at the second stage.

5. The controller according to claim 1, wherein
at the second stage, the execution section (22) does not execute, as the positional relationship adjustment action, action to adjust the positional relationship between the own vehicle (100) and the target (T), and such action is based on the positional relationship information actually measured at the second stage.

6. The controller according to claim 5, wherein
at the second stage, the execution section (22) executes vehicle speed control action on the basis of travel state information of the own vehicle (100) actually measured at the first stage, the vehicle speed control action being action to automatically control a vehicle speed generated to the own vehicle (100).

7. The controller according to claim 5, wherein
at the second stage, the execution section (22) executes vehicle speed control action on the basis of travel state information of the diagonally forward vehicle (FD) actually measured at the first stage, the vehicle speed control action being action to automatically control a vehicle speed generated to the own vehicle (100).

8. The controller according to claim 5, wherein
at the second stage, the execution section (22) executes vehicle speed control action on the basis of travel state information of a rear vehicle (B) actually measured at the first stage, the vehicle speed control action being action to automatically control a vehicle speed generated to the own vehicle (100), and the rear vehicle (B) being another straddle-type vehicle (300A) that is located behind the own vehicle (100) and travels with the own vehicle (100) in the group.

9. The controller according to any one of claims 1 to 8, wherein
the execution section (22) determines whether to initiate and/or terminate the second stage on the basis of travel state information of the own vehicle (100).

10. The controller according to any one of claims 1 to 8, wherein
the execution section (22) determines whether to initiate and/or terminate the second stage on the basis of travel state information of the diagonally forward vehicle (FD).

11. The controller according to any one of claims 1 to 8, wherein
the execution section (22) determines whether to initiate and/or terminate the second stage on the basis of actual measured information on the positional relationship between the own vehicle (100) and the diagonally forward vehicle (FD).

12. The controller according to any one of claims 1 to 8, wherein
the execution section (22) determines whether to initiate and/or terminate the second stage on the basis of travel state information of a rear vehicle (B), which is another straddle-type vehicle (300A) located behind the own vehicle (100) and traveling with the own vehicle (100) in the group.

13. The controller according to any one of claims 1 to 8, wherein
the execution section (22) determines whether to initiate and/or terminate the second stage on the basis of actual measured information on positional relationship between the own vehicle (100) and a rear vehicle (B), which is another straddle-type vehicle (300A) located behind the own vehicle (100) and traveling with the own vehicle (100) in the group.

14. The controller according to any one of claims 1 to 8, wherein
the execution section (22) determines whether to initiate and/or terminate the second stage on the basis of road facility information.

15. A control method for a rider-assistance system (1), the control method comprising:
acquiring positional relationship information by an acquisition section (21) of a controller (20) during travel of an own vehicle (100) in an enabled state of a group travel mode as a mode in which plural straddle-type vehicles (300) including the own vehicle (100) travel in a group, the positional relationship information being actual measured information on a positional relationship between the own vehicle (100) and a target (T); and
executing positional relationship adjustment action by an execution section (22) of the controller (20) on the basis of the positional relationship information acquired by the acquisition section (21), the positional relationship adjustment action being action to adjust the positional relationship between the own vehicle (100) and the target (T), wherein
at a first stage of an automatic deceleration process that is a process to automatically decelerate the traveling own vehicle (100) and cause the own vehicle (100) to stop or slow down in a state where there is a diagonally forward vehicle (FD) as another straddle-type vehicle (300A) that is located diagonally ahead of the own vehicle (100) and travels with the own vehicle (100) in the group but there is no other straddle-type vehicle (300A) that is located in front of the own vehicle (100) and travels with the own vehicle (100) in the group, the execution section (22) executes, as the positional relationship adjustment action, action to adjust a positional relationship between the own vehicle (100) and the diagonally forward vehicle (FD) as the target (T), and such action is based on the positional relationship information actually measured at the first stage, and
at a second stage after the first stage of the automatic deceleration process, the execution section (22) does not execute, as the positional relationship adjustment action, the action to adjust the positional relationship between the own vehicle (100) and the diagonally forward vehicle (FD) as the target (T), and such action is based on the positional relationship information actually measured at the second stage.
